# EUROPÄISCHE PATENTSCHRIFT

(11) **EP 1 012 024 B1**
(45) Veröffentlichungstag und Bekanntmachung des Hinweises auf die Patenterteilung: **16.01.2002**
(21) Anmeldenummer: 98954162.8
(22) Anmeldetag: 07.09.1998
(51) Int. Cl.: B62D 1/04

(54) **GETEILTES LENKRAD**
DIVIDED STEERING WHEEL
VOLANT DE DIRECTION EN DEUX PARTIES

(30) Priorität: 09.09.1997 DE 29716529 U
(43) Veröffentlichungstag der Anmeldung: 28.06.2000
(73) Patentinhaber: Takata-Petri AG, 63743 Aschaffenburg (DE)
(72) Erfinder: KAMM, Martin, D-13469 Berlin (DE)
(74) Vertreter: Bärmann, Klaus, Dipl.-Ing.
(86) Internationale Anmeldenummer: DE9802691
(87) Internationale Veröffentlichungsnummer: WO9912790

(56) Entgegenhaltungen:
- EP-A- 0 027 294
- DE-A- 1 955 142
- DE-A- 4 429 214
- DE-U- 29 716 529
- GB-A- 2 022 764

## Beschreibung

Die Erfindung betrifft eine geteiltes Lenkrad nach dem Oberbegriff des Anspruchs 1.

Aus der DE 44 29 214 Al ist ein derartiges geteiltes Fahrzeuglenkrad bekannt. Das Lenkrad ist aus zwei Lenkradteilen zusammengesetzt. Ein erstes Lenkradteil umfaßt den Lenkradkranz mit Ummantelung sowie Speichen und einen Befestigungsflansch. Ein zweites Lenkradteil bildet den Nabenteil und ist mit einer Buchse zur Befestigung des Teils am Ende der Lenkspindel versehen. Dabei weist in bekannter Weise die Lenkspindel eine Keilverzahnung auf, die formschlüssig in eine innenseitige Keilverzahnung der Buchse paßt.

Der Vorteil dieses geteilten Lenkrades besteht darin, daß die gesonderte Herstellung und Montage einer Abdeckung für ein Airbagmodul entfällt und daß das Lenkrad mit integriertem Airbagsystem als fertige Baugruppe an den Automobilhersteller ausgeliefert werden kann. Der Nachteil besteht darin, daß das Lenkrad nicht einfach mittels einer von oben betätigbaren Mutter auf der Lenkspindel befestigt werden kann, sondern von der Seite betätigbare kompliziertere Befestigungsarten erforderlich sind.

Der Erfindung liegt die Aufgabe zugrunde, den Aufbau und insbesondere die Verbindung eines geteilten Lenkrades mit der Lenkspindel zu vereinfachen.

Erfindungsgemäß wird das gemäß den Merkmalen des Anspruchs 1 erreicht.

Bei einem geteilten Lenkrad mit einem Oberteil mit dem Lenkradkranz und einem Unterteil, das einer Lenkspindel zugeordnet ist, wobei das Ober- mit dem Unterteil lösbar verbunden ist, ist erfindungsgemäß das Unterteil mit der Lenkspindel unlösbar verbunden. Damit ist die Lenkspindel integraler Bestandteil eines Teils des Lenkrades und komplizierte Mechanismen zur Befestigung des Unterteils auf der Lenkspindel entfallen.

Das Unterteil kann mit der Lenkspindel verschweißt sein oder es kann an dieser angegossen sein. So kann zum Beispiel ein Magnesium-Verbundguß vorgesehen sein. Es ist aber auch möglich, daß das Unterteil und die Lenkspindel aus einem Gußteil bestehen.

Es ist zweckmäßig, daß das Unterteil mehrere Speichen aufweist und daß diese als Energieabsorptionsspeichen ausgebildet sind. In einer bevorzugten Ausführungsform sind sechs Speichen im gleichen Winkelabstand vorgesehen.

Das Unterteil weist in einer weiteren Ausgestaltung einen Träger für ein Airbagmodul auf, d.h. der Träger ist integrierter Bestandteil des Unterteils.

In einer weiteren Ausführungsform ist vorgesehen, daß zwischen dem Oberteil und dem Unterteil ein gesonderter Träger für ein Airbagmodul vorhanden ist.

Die Erfindung soll in Ausführungsbeipielen anhand von Zeichnungen erläutert werden. Es zeigen:
- Fig. 1: einen Schnitt durch ein Lenkrad in einer ersten Ausführungsform;
- Fig. 2: einen Schnitt durch ein Lenkrad in einer zweiten Ausführungsform.

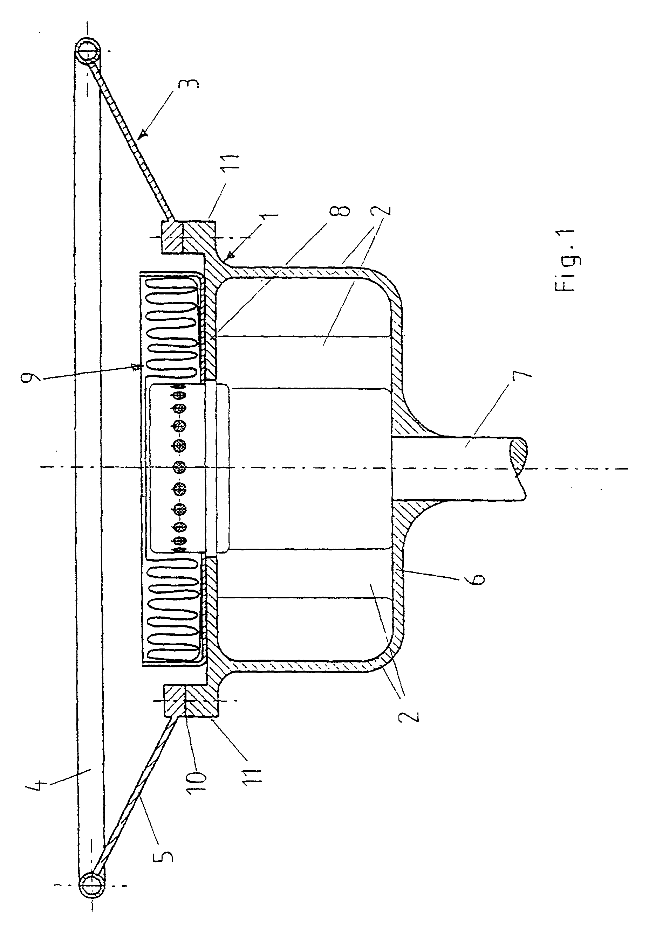

Das Lenkrad gemäß Fig. 1 besteht aus einem Unterteil 1, das sechs Speichen 2 aufweist, und aus einem Oberteil 3 mit einem Lenkradkranz 4 und Speichen 5. Das Unterteil 1 weist weiterhin einen der Lenkspindel zugeordneten Ring 6 auf, über den das Unterteil erfindungsgemäß mit einer Lenkspindel 7 unlösbar verbunden ist, indem beide miteinander vergossen sind. Dabei kann die Lenkspindel 7 in bekannter Weise aus Stahl bestehen, an die das Unterteil 1, das z.B aus einer Magnesiumlegierung besteht, angegossen wird. Damit entfallen aufwendige mechanische Verbindungsteile, die sonst an dieser Stelle bei einem geteilten Lenkrad erforderlich sind.

Die Speichen 2 sind oben ebenfalls durch einen Ring 8 miteinander verbunden, der auch als Träger für ein Airbagmodul 9 dient. Die Speichen 2 im Unterteil sind so ausgebildet, daß sie sich im Crashfall verformen können, so daß der zusätzliche Vorteil erzielt wird, daß das Lenkrad in diesem Bereich im Crashfall Energie absorbieren kann.

Zwischen dem Unterteil 1 und dem Oberteil 3 ist eine Trennebene 10 vorhanden, in der Lenkradmontagepunkte 11 vorgesehen sind, von denen mindestens drei vorhanden sein sollten.

In der beschriebenen Ausführungsform ist es zweckmäßig, dem Fahrzeughersteller das komplett montierte Lenkrad mit der daran befindlichen Spindel und dem montierten Airbagmodul anzuliefern, da beim Lenkradhersteller die Montage dieser Teile rationeller erfolgen kann als beim Fahrzeughersteller. Der Montageaufwand beim Fahrzeughersteller aber auch insgesamt wird dadurch weiter verringert.

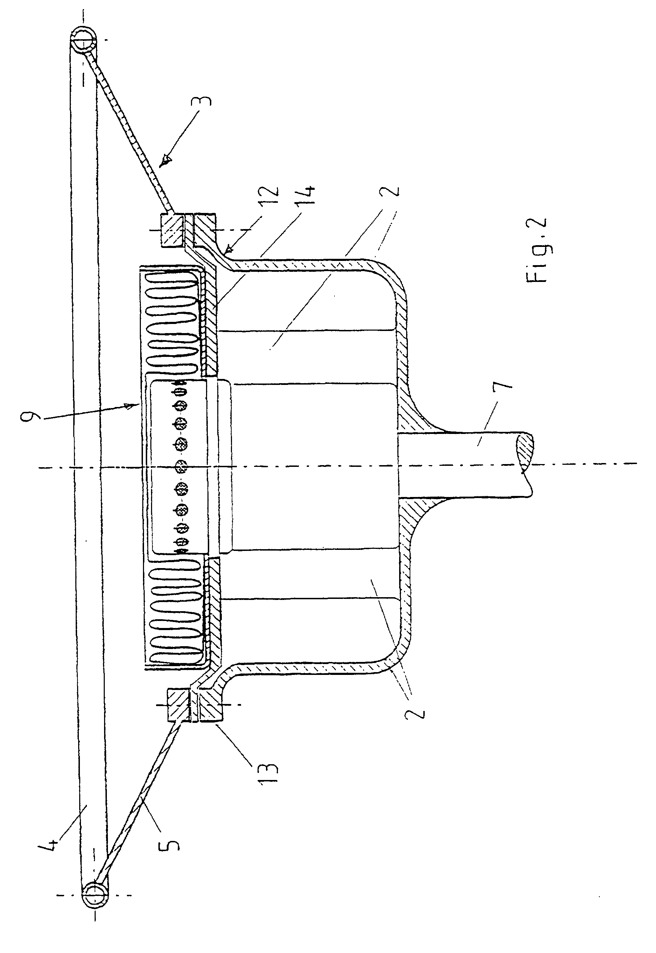

Das Lenkrad gemäß der Fig. 2 weist ein Unterteil 12 auf, bei dem die Speichen 2 oben durch einen im Verhältnis zum Ausführungsbeispiel der Fig.1 schmalen Ring 13 miteinander verbunden sind. Weiterhin ist ein gesonderter ringförmiger Träger 14 für das Airbagmodul 9 vorgesehen. Dieser Träger 14 ist in der Trennebene zwischen dem Unterteil 12 und dem Oberteil 3 an den Lenkradmontagepunkten z.B. durch Verschrauben mit beiden verbunden. Bei dieser Ausführungsform kann wie beim Ausführungsbeispiel der Fig. 1 das komplett mit der Lenkspindel und dem Airbagmodul vormontierte Lenkrad beim Fahrzeughersteller angeliefert werden. Es ist aber auch möglich, nur das Oberteil 3 mit dem Airbagmodul 9 vorzumontieren und die bereits im Fahrzeug montierte Baugruppe mit der Lenkspindel 7 und dem Unterteil 12 mit der Baugruppe Oberteil-Airbagmodul zu komplettieren.

## Patentansprüche

1. Geteiltes Lenkrad mit einem Oberteil (3), das den Lenkradkranz aufweist, und einem Unterteil (1, 11), das einer Lenkspindel (7) zugeordnet ist, wobei das Ober- mit dem Unterteil lösbar verbunden ist und wobei das Unterteil (1) einen Träger (8) für ein Airbagmodul (9) aufweist oder zwischen dem Oberteil (3) und dem Unterteil (11) ein gesonderter Träger (14) für ein Airbagmodul (9) vorgesehen ist,
**dadurch gekennzeichnet,**
**daß** das Unterteil (1, 11) mit der Lenkspindel (7) unlösbar verbunden ist und mehrere Speichen (5) aufweist, die als Energieabsorptionsspeichen ausgebildet sind.

2. Lenkrad nach Anspruch 1, **dadurch gekennzeichnet, daß** das Unterteil (1, 11) mit der Lenkspindel (7) verschweißt ist.

3. Lenkrad nach Anspruch 1, **dadurch gekennzeichnet, daß** das Unterteil (1, 11) an der Lenkspindel (7) angegossen ist.

4. Lenkrad nach Anspruch 1 und 3, **dadurch gekennzeichnet, daß** ein Magnesium-Verbundguß vorgesehen ist.

5. Lenkrad nach Anspruch 1 oder 4, **dadurch gekennzeichnet, daß** das Unterteil und die Lenkspindel aus einem Gußteil bestehen.

6. Lenkrad nach mindestens einem der vorhergehenden Ansprüche, **dadurch gekennzeichnet, daß** das Unterteil (1, 11) sechs Speichen (5) im gleichen Winkelabstand aufweist.

## Claims

1. Divided steering wheel with an upper part (3) which has the steering wheel rim and a lower part (1,11) which is assigned to a steering spindle (7), wherein the upper part is separably connected to the lower part, and wherein the lower part (1) has a support for an airbag module (9) or between the upper part (3) and the lower part (11) a separate carrier (14) for an airbag module is provided
**characterised in that**
the lower part (1, 11) is connected inseparably to the steering spindle (7) and has several spokes (5) which are formed as energy absorbing spokes.

2. Steering wheel according to claim 1 **characterised in that** the lower part (1, 11) is welded to the steering spindle (7).

3. Steering wheel according to claim 1 **characterised in that** the lower part (1, 11) is cast on the steering spindle (7).

4. Steering wheel according to claim 1 and 3 **characterised in that** a magnesium compound casting is provided.

5. Steering wheel according to claim 1 or 4 **characterised in that** the lower part and the steering spindle are made of a cast part.

6. Steering wheel according to at least one of the preceding claims, **characterised in that** the lower part (1, 11) has six spokes (5) at the same angular spacing.

## Revendications

1. Volant de direction en plusieurs parties, comportant une partie supérieure (3) qui comprend la couronne de volant, et une partie inférieure (1, 11) à laquelle est associée une colonne de direction (7), la partie supérieure étant reliée de façon détachable à la partie inférieure et la partie inférieure (1) comprenant un support (8) pour un module d'airbag (9), ou un support (14) séparé pour un module d'airbag (9) étant prévu entre la partie supérieure (3) et la partie inférieure (11), **caractérisé en ce que** la partie inférieure (1, 11) est reliée de façon non détachable à la colonne de direction (7) et comprend plusieurs rayons (5) qui sont réalisés sous forme de rayons d'absorption d'énergie.

2. Volant de direction selon la revendication 1, **caractérisé en ce que** la partie inférieure (1, 11) est soudée avec la colonne de direction (7).

3. Volant de direction selon la revendication 1, **caractérisé en ce que** la partie inférieure (1, 11) est moulée sur la colonne de direction (7).

4. Volant de direction selon les revendications 1 et 3, **caractérisé en ce qu'**il est moulé avec une matière composite à base de magnésium.

5. Volant de direction selon l'une ou l'autre des revendications 1 et 4, **caractérisé en ce que** la partie inférieure et la colonne de direction sont constituées en une pièce moulée.

6. Volant de direction selon l'une quelconque des revendications précédentes, **caractérisé en ce que** la partie inférieure (1, 11) comprend six rayons (5) à écarts angulaires égaux.
